# EUROPEAN PATENT APPLICATION

(11) **EP 1 741 969 A2**
(43) Date of publication of application: **10.01.2007**
(21) Application number: 06116293.9
(22) Date of filing: 29.06.2006
(51) Int. Cl.: F16M 13/00

(54) **Accessory for digital terrestrial television receiver**

(30) Priority: 07.07.2005 ES 200501580 U
(71) Applicant: BCN Distribuciones, S.A., 08210 Barbera del Valles (ES)
(72) Inventor: Pastor Munté, Carlos BCN Distribuciones, S.A., 08210 Barcelona (ES)
(74) Representative: Manresa Val, Manuel

(57) **Abstract**

An accessory for digital terrestrial television (DTT) receiver of the type comprising a DTT receiver (1), with predetermined shape and dimensions characterised in that it incorporates a frame (2) adaptable to the referred shape and dimensions of the DTT receiver (1), with the means to fix it to the mentioned DTT receiver, either directly to it or via a rear frame (5) that, at least partially encloses said receiver, configuring a space between the frame (2) and the DTT receiver (1) to position and secure at least one photograph or drawing that is visible through at least one aperture (4) in the frame (2).

## Description

An accessory for digital terrestrial television (DTT) receiver of the type comprising a DTT receiver, with predetermined shape and dimensions characterised in that it incorporates a frame adaptable to the referred shape and dimensions of the DTT receiver, with the means to fix it to the mentioned DTT receiver, either directly to it or via a rear frame that, at least partially encloses said receiver, configuring a space between the frame and the DTT receiver to position and secure at least one photograph or drawing that is visible through at least one aperture in the frame.

### BRIEF DESCRIPTION OF THE INVENTION

Digital Terrestrial Television (DTT) receivers are very quickly becoming a reality. These receivers involve a series of advantages with respect to current ones.

Firstly, image and sound transmissions are through by digital modulation, unlike the currently available ones that transmit employing analogue modulation.

Secondly, analogue receivers greatly suffer from interference compared to DTT receivers, which are hardly affected at all by interference. This results in enhanced image and sound quality.

Thirdly, DTT receivers have a greater range of channels than analogue ones. In current television, each channel requires a frequency, and generally leaves contiguous ones free, whereas in DTT several channels can occupy each frequency.

As can be easily seen, DTT involves several big advantages, and make migration to current DTT a necessity, with this migration actually becoming law in the very near future.

One of the great drawbacks of this type of receiver is the fact that they have to be located very close to the same equipment, for example, on top of the television, but they are aesthetically inadequate elements that do not fit into their surroundings. This causes a certain reticence in potential users who do not see them as adequate.

In view of all this, the inventor has created a frame, adaptable to the shape of the receiver, which converts said receiver into a picture frame that dissimulates the presence of a DTT receiver incorporated inside.

In this way, the picture frame hides the DTT receiver and makes it much more adaptable to its surroundings.

The purpose of the present invention is an accessory for digital terrestrial television (DTT) receiver of the type comprising a DTT receiver, with predetermined shape and dimensions characterised in that it incorporates a frame adaptable to the referred shape and dimensions of the DTT receiver, with the means to fix it to the mentioned DTT receiver, either directly to it or via a rear frame that, at least partially encloses said receiver, configuring a space between the frame and the DTT receiver to position and secure at least one photograph or drawing that is visible through at least one aperture in the frame.

### BRIEF DESCRIPTION OF THE DRAWINGS

With the purpose to facilitate the explanation two sheets of drawings are attached to the present description, in which a practical case of an embodiment has been reproduced, which is mentioned only for exemplificative, non-limitative of the scope of the present invention.
- Figure 1 is a partial perspective view from the front of the object of the present invention.
- Figure 2 is a partial perspective view from the rear of the object of the present invention.

### CONCRETED EMBODIMENT OF THE APPLICATION

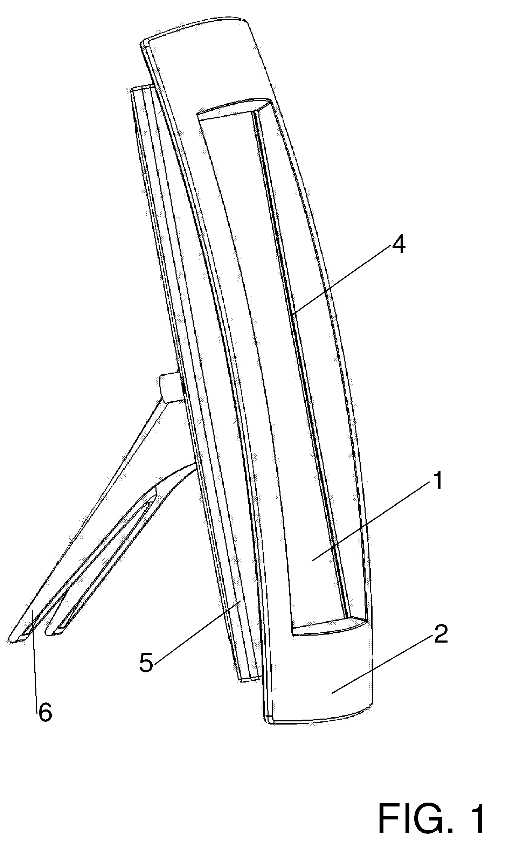

Figure 1 illustrates a Digital Terrestrial Television DTT receiver 1, a frame 2, an aperture 4 a rear frame 5 and a support 6.

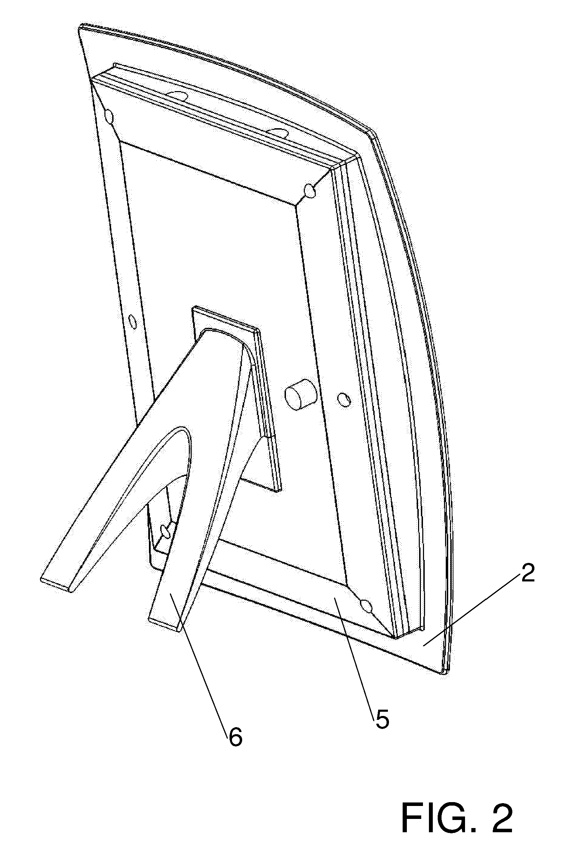

Figure 2 illustrates the frame 2, the rear frame 5 and the support 6.

Thus, in this concreted embodiment, a photograph or drawing is fitted over the DTT receiver 1.

Over the face of DTT receiver 1 where the photograph or drawing is fitted, frame 2 is positioned so that it adapts to the shape and dimensions of the DTT receiver 1, thus configuring an aperture 4, through which the mentioned photograph or drawing is visible.

In another embodiment, in the case that where desired to locate different, smaller size photographs or drawings on the DTT receiver, it would be possible for frame 2 to incorporate different apertures 4 in order to see all at the same time.

Subsequently, the rear frame 5 is fitted, so that it, at least partially, encloses the DTT receiver 1, securing it to the frame 2 by fastening means (not illustrated), such as press fittings or clip-on systems etc.

Finally, a support 6 is fitted to the rear frame, being the accessory ready for use. In the case of not having a rear frame, said support could be fitted to the frame 2, or to the actual DTT receiver 1.

Once the accessory is ready, it is placed, for example, on top of the TV set, displaying a photograph or drawing through the aperture 4, when it actually hides a DTT receiver 1 inside.

The present invention describes a new accessory for a digital terrestrial television (DTT) receiver. The examples here mentioned are not limitative of the present invention, for that reason it will be able to have different applications and/or be adapted, all of them within the scope of the following claims.

## Claims

1. An accessory for digital terrestrial television (DTT) receiver of the type comprising a DTT receiver (1), with predetermined shape and dimensions **characterised in that** it incorporates a frame (2) adaptable to the referred shape and dimensions of the DTT receiver (1), with the means to fix it to the mentioned DTT receiver, either directly to it or via a rear frame (5) that, at least partially encloses said receiver, configuring a space between the frame (2) and the DTT receiver (1) to position and secure at least one photograph or drawing that is visible through at least one aperture (4) in the frame (2).

2. Accessory according to claim 1, **characterised in that** it also incorporates a support (6) or support with the means to secure it, either to the rear frame (5) or to the same DTT receiver (1).
